# DEMANDE DE BREVET EUROPEEN

(11) **EP 0 631 426 A1**
(43) Date de publication de la demande: **28.12.1994**
(21) Numéro de dépôt: 93201790.8
(22) Date de dépôt: 22.06.1993
(51) Int. Cl.: H04N 1/32

(54) **Dispositif de fac-similé**

(71) Demandeur: Kallimopoulos, J., NL-1186 BK Amstelveen (NL)
(72) Inventeur: Kallimopoulos, J., NL-1186 BK Amstelveen (NL)

(57) **Abrégé**

Le fac-similé à haute fidelité de transmission vérifie l'information transmise et corrige les erreurs selon un algorithme de l'art. Le télécopieur a la possibilité ce charger une page longitudinalement.

## Description

L'appareil pour lequel on demande le brevet est un fax, c'est à dire fascimile lequel mis apart ses charactéristiques de base il a aussi les charactéristiques suivants :
1. Le transport des informations digitales de l'une station fax àl'autre station fax se réalise à une erreur plus petite ou égale à 7 %.
2. Le transport des informations écrites par lettres de l'alphabet ou chiffres dans un digit d'image c'est à dire pixel de dimensions 2 x 2 mm² de l'une station fax à l'autre station fax se réalise à une erreur 0%.
3. Il ala possibilité de transmetre automatiquement l'image réçue de la page aprés l'avoir photocopiée et sur demande de la station de l'emission de l'image.
4. Il a la possibilité de charger une page de format A2 à la longueur, cést à dire au coté qui a une longueur de 29.8 cm.

## Revendications

1. L'algorithme de la vérification de l'information juste et la correction des erreurs aléatoires.

2. Les moyens mechaniques, électroniques et logiciel, c'est à dire le software qui est nécessaire pour la retransmition de la photocopie de l'image récue.

3. Les moyens mechaniques qui permettent au fascimile de charger la page longitudinalement.
